# EUROPÄISCHE PATENTSCHRIFT

(11) **EP 2 107 284 B1**
(45) Veröffentlichungstag und Bekanntmachung des Hinweises auf die Patenterteilung: **17.09.2014**
(21) Anmeldenummer: 09005050.1
(22) Anmeldetag: 06.04.2009
(51) Int. Cl.: F16K 27/00, F15B 13/08, F15B 21/00

(54) **Ventilgehäuserohling, Ventilbausatz sowie Ventilgruppe**
Valve housing blank, valve component set and valve group
Ebauche de boîtier de soupape, kit de soupape et groupe de soupape

(30) Priorität: 04.04.2008 DE 202008004672 U
(43) Veröffentlichungstag der Anmeldung: 07.10.2009
(73) Patentinhaber: Bürkert Werke GmbH, 74653 Ingelfingen (DE)
(72) Erfinder: Renninger, Jürgen, 74243 Langenbrettach (DE)
(74) Vertreter: Prinz & Partner

(56) Entgegenhaltungen:
- EP-A1- 0 735 302
- DE-A1- 3 422 336
- US-A- 3 572 368
- US-A1- 2004 194 834

## Beschreibung

Die Erfindung betrifft einen Ventilgehäuserohling, einen Ventilbausatz mit einem erfindungsgemäßen Rohling sowie eine aus dem Ventilbausatz gebildete Ventilgruppe, vgl. dazu beispielsweise DE-A-34 22 336.

In der Prozeßtechnik müssen Fluide in Leitungen an definierte Orte transportiert werden, um dort beispielsweise gemischt oder auf mehrere Leitungszweige verteilt zu werden. Hierzu sind in der Regel mehrere Ventile notwendig, die im Fluidbereich miteinander verbunden sind. Diese mehreren Ventile werden entweder über Leitungsverbindungsstücke wie T-Stücke auf bekannte Weise wie Schweißen, Klemmen, Flanschen, Schrauben oder dergleichen zusammengefügt, was aufwendig ist und für größeren Platzbedarf sorgt. Alternativ werden in einen Ventilblock Kanäle eingearbeitet, und Ventile werden auf diesen Block aufgesetzt. Der Block selbst ist dabei für die spezielle Anwendungsform maßgeschneidert, nachträgliche Änderungen sind nicht angedacht. Hierzu zählt auch die Erweiterung mit zusätzlichen Ventilen. Diese massiven Ventilblöcke werden häufig auch aus Edelstahl gearbeitet, was kostenintensiv ist.

Aufgabe der Erfindung ist es, einen Ventilgehäuserohling zu schaffen, der in einem flexiblen Ventilbausatz zusammensetzbar ist, wodurch flexible und kostengünstige Ventilgruppen unterschiedlicher Bauart hergestellt werden können.

Der erfindungsgemäße Ventilgehäuserohling weist einen ersten Aufnahmeraum für einen Ventileinsatz und einen zweiten Aufnahmeraum für einen Ventileinsatz auf, wobei von jedem Aufnahmeraum wenigstens zwei Leitungsabschnitte ausgehen. Darüber hinaus erstrecken sich von der Außenseite des Ventilgehäuserohlings ausgehende Zuführkanäle (in ihrer Längserstreckungsrichtung) in Richtung zu einem zugeordneten Aufnahmeraum oder einem zugeordneten Leitungsabschnitt, wobei zwischen den Zuführkanälen einerseits und dem zugeordneten Aufnahmeraum oder dem zugeordneten Leitungsabschnitt andererseits eine zerstörbare Zwischenwand vorgesehen ist. Natürlich ist die Zwischenwand auf der unmittelbaren, kürzesten Verbindungsstrecke zwischen den Kanälen und dem Aufnahmeraum / Leitungsabschnitt vorgesehen.

Beim erfindungsgemäßen Ventilgehäuserohling sind die Leitungsabschnitte zu jedem Ventilbauteil und zugehörige, potentielle Zuführkanäle anfangs noch voneinander getrennt. Die dünnen Zwischenwände lassen sich jedoch schnell und kostengünstig z.B. durch Fräsen oder Bohren möglichst einzeln öffnen, so daß beliebige Kanäle gebildet werden, die auf den gewünschten Einsatzzweck abgestimmt sind.

Gemäß der bevorzugten Ausführungsform sind bis auf das Öffnen einzelner oder zahlreicher Zwischenwände keine weiteren Außenbearbeitungsschritte mehr notwendig, d.h. keine äußere spanabhebende Bearbeitung.

Die Ventilgehäuserohlinge sind vorzugsweise Gußteile, z. B. aus Stahl, Messing oder anderen Metallegierungen oder aus Kunststoff, wobei auch Spritzgußteile darunter fallen.

Als Ventileinsätze kommen nicht nur Ventile in Frage, die beispielsweise über Gewinde eingeschraubt werden, sondern auch andere Funktionskomponenten wie Filter, Drosseln, Rückschlagventile oder dergleichen.

Gemäß einer bevorzugten Ausführungsform verlaufen Leitungsabschnitte unterschiedlicher Aufnahmeräume aufeinander zu, sind aber anfänglich noch durch eine Zwischenwand voneinander getrennt, die aber leicht entfernbar ist. Hier läßt sich durch Zerstören der Zwischenwand ein Kanal von einem Ventileinsatzteil zum benachbarten Ventileinsatz schaffen.

Die Zuführkanäle sollten vorzugsweise mit ihren zugeordneten Leitungsabschnitten fluchten, insbesondere koaxial zu diesen ausgebildet sein.

Darüber hinaus sollten auch Zuführkanäle vorgesehen sein, die seitlich auf einen oder mehrere Aufnahmeräume oder Leitungsabschnitte hin verlaufen, von diesen aber durch eine zerstörbare Zwischenwand anfänglich getrennt sind. Über diese Zuführkanäle kann eine Verbindung der Aufnahmeräume nach außen geschaffen werden, so daß beispielsweise ein benachbartes Ventilgehäuse angebunden werden kann und eine Strömungsverbindung zwischen beiden Ventilgehäusen erzielbar ist.

Der erste Aufnahmeraum definiert z.B. eine erste Längsachse und der zweite Aufnahmeraum eine dazu parallele Längsachse. Bei dieser Ausführungsform kann man von derselben Seite aus die Ventileinsätze in das Ventilgehäuse einführen.

Vorteilhaft ist auch, wenn der erste Aufnahmeraum eine erste Längsachse definiert, daß hierzu rechtwinklig verlaufende Zuführkanäle vorgesehen sind.

In einer hierzu erweiterten Ausführungsform lassen sich weitere Zuführkanäle nicht nur rechtwinklig zur ersten Längsachse, sondern auch zu den anderen Längsachsen ausrichten, so daß Zuführkanäle und Aufnahmeräume insgesamt in allen drei zueinander senkrecht stehenden Raumrichtungen vorgesehen sind. Vorteil hierbei ist, daß die Ventilgehäuse auf fast beliebigen Seiten aneinander angefügt werden können und sich somit große Ventilgehäuseblöcke bilden lassen.

Hier ist es auch vorteilhaft, wenn in allen drei senkrechten Raumachsen parallel verlaufende Zuführkanäle vorgesehen sind, die als Zulauf- und/oder Auslaßkanäle wirken können. Dieses Merkmal ist natürlich auch mit allen anderen nachfolgenden und vorgenannten Merkmalen beliebig kombinierbar.

Die Zuführkanäle und die Aufnahmeräume können von entgegengesetzten Außenseiten des Ventilgehäuserohlings ausgehen und paarweise zueinander fluchten, d.h. aufeinander zu verlaufen, so daß nur über die Zerstörung der Zwischenwand ein Strömungskanal gebildet werden kann.

Zur optimalen und leichten Anbindung und Erzielung eines Baukastens ist es vorteilhaft, wenn die gemeinsame Außenseite von zumindest zwei Zuführkanälen oder Aufnahmeräumen als plane Flanschfläche ausgebildet ist. Über diese plane Flanschfläche läßt sich dann ein benachbartes Ventilgehäuse schnell anschließen.

Zur Erweiterung des Ventilgehäuses und Koppelung an andere Ventilgehäuse sollte bereits ein Befestigungsmittel am Ventilgehäuserohling angeformt sein, vorzugsweise einstückig angeformt sein. Dieses Befestigungsmittel erlaubt das Anflanschen eines baugleichen Ventilgehäuses. Dieses Merkmal ist natürlich auch mit allen anderen nachfolgenden und vorgenannten Merkmalen beliebig kombinierbar.

Jeder Flanschfläche sollte ein Befestigungsmittel zugeordnet sein. Dieses Merkmal ist natürlich auch mit allen anderen nachfolgenden und vorgenannten Merkmalen beliebig kombinierbar.

Natürlich ist es besonders vorteilhaft, wenn eine Ventilgruppe, die aus mehreren Ventilblöcken besteht, in zwei zueinander senkrechten Richtungen beliebig erweiterbar ist. Hierzu sieht die Erfindung Flanschflächen in zwei zueinander senkrechten Ebenen vor. Dieses Merkmal ist natürlich auch mit allen anderen nachfolgenden und vorgenannten Merkmalen beliebig kombinierbar.

In der später noch detailliert dargestellten bevorzugten Ausführungsform ist das Befestigungsmittel ein mit einer Öffnung versehener Flanschabschnitt, durch den Schrauben hindurchgeführt werden können, über die die Ventilgehäuse miteinander verspannt werden.

Die Aufnahmeräume gehen vorzugsweise von einer Oberseite des Ventilgehäuses aus. Zumindest zwei parallele Zuführkanäle beginnen jeweils von seitlichen Außenflächen, und zwar von senkrecht zur Oberseite verlaufenden Außenflächen.

Die parallelen Zuführkanäle liegen in Richtung einer durch die Aufnahmeräume definierten Längsachsen übereinander, so daß der Ventilgehäuserohling eine schmale Gestalt aufweist, die insgesamt langgestreckt ist. Dadurch lassen sich mehrere Ventilgehäuse leicht nebeneinander anordnen.

Wenn der Aufnahmeraum im Bereich der Leitungsabschnitte einen Absatz hat, kann dieser zur Aufnahme einer Ventilsitzbuchse dienen, so daß auch hier der Ventilgehäuserohling keine separate, aufwendige Bearbeitung erfordert.

Die Erfindung betrifft darüber hinaus auch einen Ventilbausatz mit mehreren Ventilgehäusen aus Ventilgehäuserohlingen gemäß der Erfindung. Mehrere Zwischenwände sind dabei zumindest teilweise entfernt, um durchgehende Kanäle zu bilden und mehrere Zuführkanäle und/oder Leitungsabschnitte miteinander in Strömungsverbindung zu bringen. Somit kann aus einem Grundbaustein, nämlich dem Ventilgehäuserohling, der vorzugsweise nur zwei Ventilen Platz bietet, eine Vielzahl von Varianten hergestellt werden.

Zwischen den Ventilgehäusen müssen allenfalls Schrauben, Dichtungen und Muttern vorgesehen werden, ohne daß individuell hergestellte Gehäuse oder Zwischengehäuse erforderlich sind.

Der Ventilbausatz kann darüber hinaus auch noch ein Koppelteil beinhalten, das zwischen benachbarten Ventilgehäusen geschaltet ist und diese miteinander strömungsverbindet. Das Koppelteil besitzt Durchlaßöffnungen, die in die Zuführkanäle der zu koppelnden Ventilgehäuse münden.

Schließlich betrifft die Erfindung auch eine Ventilbaugruppe aus einem Ventilbausatz nach der Erfindung, wobei Zuführkanäle aneinandergrenzender Ventilgehäuse ineinander übergehen und damit einen oder mehrere durchgehende Kanäle bilden.

Das Koppelteil muß nicht separat befestigt sein, sondern kann zwischen benachbarten Ventilgehäusen geklemmt werden. Dieses Merkmal ist natürlich auch mit allen anderen nachfolgenden und vorgenannten Merkmalen beliebig kombinierbar.

Zwischenwände zwischen den benachbarten Ventilgehäusen und/oder Koppelteilen sind vorzugsweise entfernt, zur Bildung von Strömungsdurchlässen zwischen Ventilgehäuse und/oder Koppelteilen.

Auch das Koppelelement ist vorzugsweise ein Metall oder Kunststoffgußteil, wobei natürlich auch eine spanende Herstellung dieses Teils denkbar ist. Darüber hinaus wäre es auch möglich, zwei Rohrabschnitte als Zwischenstücke zwischen zwei Ventilgehäusen vorzusehen. Das Koppelelement bringt jedoch mehr Stabilität, da es vorzugsweise einen breiten Flanschabschnitt besitzt.

Alternativ zu der zuvor beschriebenen Ausführungsart können die einzelnen parallelen Ventilgehäuse auch schräg einwärts verlaufende Aufnahmeräume besitzen, wie bei Schrägsitzventilen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Perspektivansicht einer erfindungsgemäßen Ventilgruppe, die aus einem erfindungsgemäßen Ventilbausatz zusammengesetzt ist,
- Figur 2 eine Längsschnittansicht durch einen erfindungsgemäßen Ventilgehäuserohling als Teil des erfindungsgemäßen Ventilbausatzes,
- Figur 3 eine Perspektivansicht eines Koppelteils als weiteren Bestandteil des erfindungsgemäßen Ventilbausatzes und der erfindungsgemäßen Ventilgruppe,
- Figur 4 eine Längsschnittansicht durch das Koppelteil nach Figur 3,
- Figur 5 eine Explosionsansicht einer erfindungsgemäßen Ventilbaugruppe, die aus einem erfindungsgemäßen Ventilbausatz zusammengesetzt ist, und
- Figur 6 eine weitere erfindungsgemäße Ventilbaugruppe

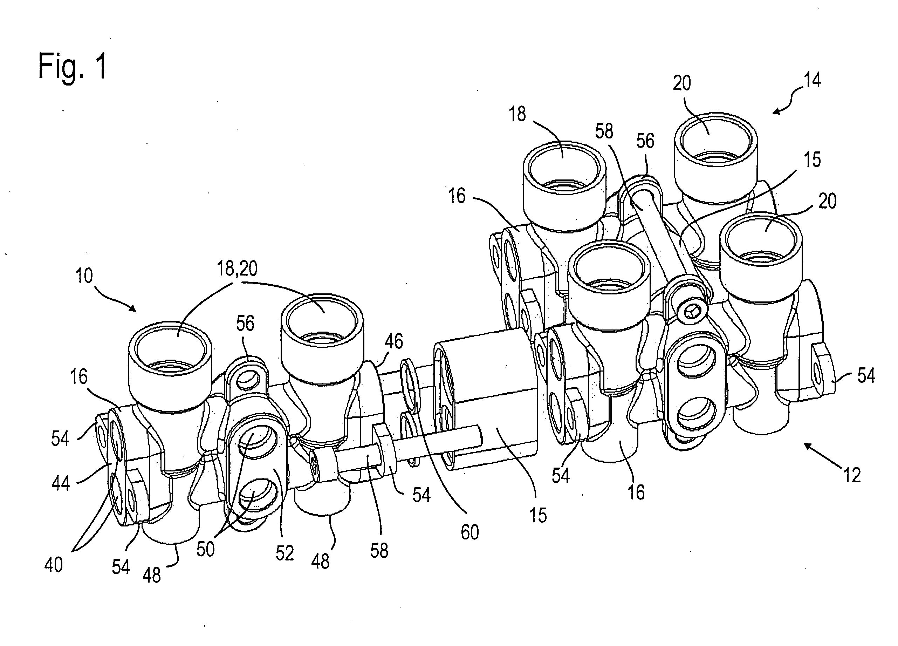

In Figur 1 ist eine Ventilbaugruppe gezeigt, die nur beispielhaft aus drei Ventileinheiten 10, 12, 14 und zwei Koppelteilen 15 zusammengesetzt ist. Die Ventileinheiten 10 bis 14 weisen jeweils gleiche Ventilgehäuse 17 auf, die aus identischen Ventilgehäuserohlingen 16 hergestellt werden.

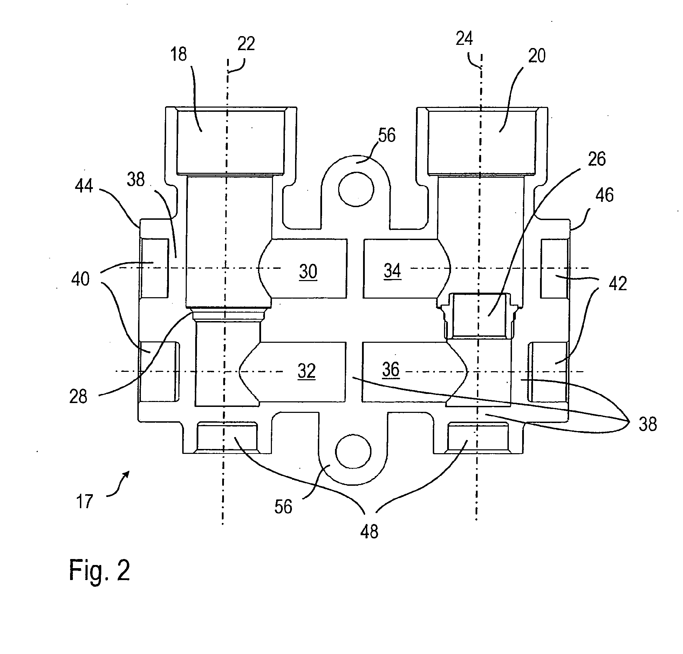

Ein solcher Ventilgehäuserohling ist in Figur 2 im Schnitt dargestellt.

Dieser Rohling 16 ist aus einem Metallguß- oder Kunststoffspritzgußmaterial geformt und hat zahlreiche Öffnungen, auf die im folgenden noch näher eingegangen wird. Diese Öffnungen werden vorzugsweise bereits beim Gießen hergestellt, so daß der Rohling gemäß Figur 2 nicht spanend bearbeitet ist.

Der Ventilgehäuserohling besitzt zwei von oben zugängliche, parallele Aufnahmeräume, nämlich einen ersten und einen zweiten Aufnahmeraum 18 bzw. 20 mit einer ersten bzw. zweiten Längsachse 22 bzw. 24. Diese beiden Längsachsen 22, 24 definieren eine erste Ebene, die in Figur 2 auch die Schnittebene bildet.

Die Aufnahmeräume 18, 20 besitzen zwei Absätze, wovon der tiefere Absatz zur Aufnahme einer Ventilsitzbuchse 26 dient, die einfach in den Absatz eingeschraubt wird, beispielsweise mittels eines selbstschneidenden oder selbstfurchenden Außengewindes.

Dieser tiefere Absatz, der das Bezugszeichen 28 trägt, ist jeweils zwischen zwei Leitungsabschnitten, nämlich einem oberen und einem unteren Leitungsabschnitt 30 bzw. 32 angeordnet, die vom ersten Aufnahmeraum 18 ausgehen. Der spiegelsymmetrische Aufbau ergibt sich auch für die rechte Hälfte des Rohlings 16 gemäß Figur 2, wobei die entsprechenden Leitungsabschnitte mit den Bezugszeichen 34 und 36 bezeichnet sind.

Wie Figur 2 zu entnehmen ist, laufen die Leitungsabschnitte 30 und 34 bzw. 32 und 36 aufeinander zu, sind jedoch durch dünne Zwischenwände 38 voneinander getrennt.

Gemäß der bevorzugten Ausführungsform, die jedoch nicht zwingend ist, erstrecken sich die Leitungsabschnitte 30 bis 36 im rechten Winkel zu den Achsen 22, 24 und liegen mit ihren Mittelachsen in der zuvor beschriebenen ersten Ebene (Zeichenebene gemäß Figur 2).

Von entgegengesetzten Außenseiten des Rohlings 16 aus erstrecken sich jeweils zwei Zuführkanäle 40, 42 in Richtung zu den zugeordneten Aufnahmeräumen 18, 20. Zwischen diesen Aufnahmeräumen 18, 20 und den Zuführkanälen 40, 42 bleibt aber ebenfalls eine dünne Zwischenwand 38 stehen, so daß die Zuführkanäle 40, 42 als Sacklöcher ausgeführt sind.

Die entgegengesetzten Außenseiten, von denen die Zuführkanäle 40, 42 ausgehen, sind als plane Flanschflächen 44, 46 ausgeführt, welche parallel zueinander verlaufen. Diese Außenseiten liegen rechtwinkelig zur Oberseite.

Auch von der Unterseite erstrecken sich, hier fluchtend mit den Achsen 22, 24, Zuführkanäle 48 in Richtung zu den Aufnahmeräumen 18, 20, wobei auch hier wieder Zwischenwände 38 stehenbleiben.

Senkrecht zur Zeichenebene und damit parallel zu den Flanschflächen 44, 46 verlaufen zwei weitere übereinander angeordnete Zuführkanäle 50 (siehe Fig. 1), deren Achsen auf Höhe der Achsen der Zuführkanäle 40, 42 liegen, in Richtung auf die Zwischenwände 38 zwischen den Leitungsabschnitten 30, 34 bzw. 32, 36.

Auch diese Zuführkanäle 50 haben jedoch im Ausgangszustand des Ventilgehäuserohlings 16 keine Strömungsverbindung zu den Leitungsabschnitten 30 bis 36 und bleiben durch eine nicht gezeigte Zwischenwand zuerst einmal nur Sacklöcher.

In Figur 1 ist angedeutet, daß fluchtend mit den Zuführkanälen 50 auch von der Rückseite und damit spiegelbildlich zur Zeichenebene weitere Zuführkanäle in Richtung Inneres ausgeführt sind, so daß der Ventilgehäuserohling auch bezüglich der Zeichenebene nach Figur 2 auf der Rückseite spiegelbildlich zur Vorderseite ausgeführt ist.

Für die beiden Zuführkanäle 50 auf jeder Außenseite ist ebenfalls eine gemeinsame Flanschfläche 52 vorgesehen, welche im rechten Winkel zu den Flanschflächen 44, 46 verläuft.

Die Zuführkanäle 40, 42, 48 und 50 erstrecken sich jeweils paarweise von einer Außenseite aus und parallel zueinander.

Darüber hinaus verlaufen Zuführkanäle 40, 42 und 50 von der Vorder- und Rückseite bzw. von den entgegengesetzten seitlichen Außenseiten aufeinander zu und fluchten miteinander.

Insgesamt ist zu erkennen, daß der entstehende Ventilblock über die Flanschflächen 44, 46, 52 in allen Richtungen erweiterbar ist, indem gleiche Ventilgehäuseblöcke einfach angeflanscht werden.

Es ergibt sich damit ein Ventilbausatz, der aus wenigen Einzelteilen besteht und sich durch ein hohes Maß an Flexibilität auszeichnet.

Zum Arretieren der Ventilblöcke aneinander weist der Ventilgehäuserohling 16 angeformte Befestigungsmittel 54, 56 auf, wobei die Befestigungsmittel 54 den Flanschen 44, 46 und die Befestigungsmittel 56 den Flanschen 52 funktional zugeordnet sind.

In der gezeigten Ausführungsform sind diese Befestigungsmittel 54 ösenartige Erweiterungen mit Durchstecköffnungen für Schraubbolzen 58, die in nicht gezeigte Muttern eingedreht werden, so daß über die Schraubbolzen 58 und die Befestigungsmittel 54, 56 benachbarte Ventilblöcke miteinander verklemmt werden.

Bevorzugt werden an die benachbarten Flanschflächen nur Dichtungen 60 gelegt.

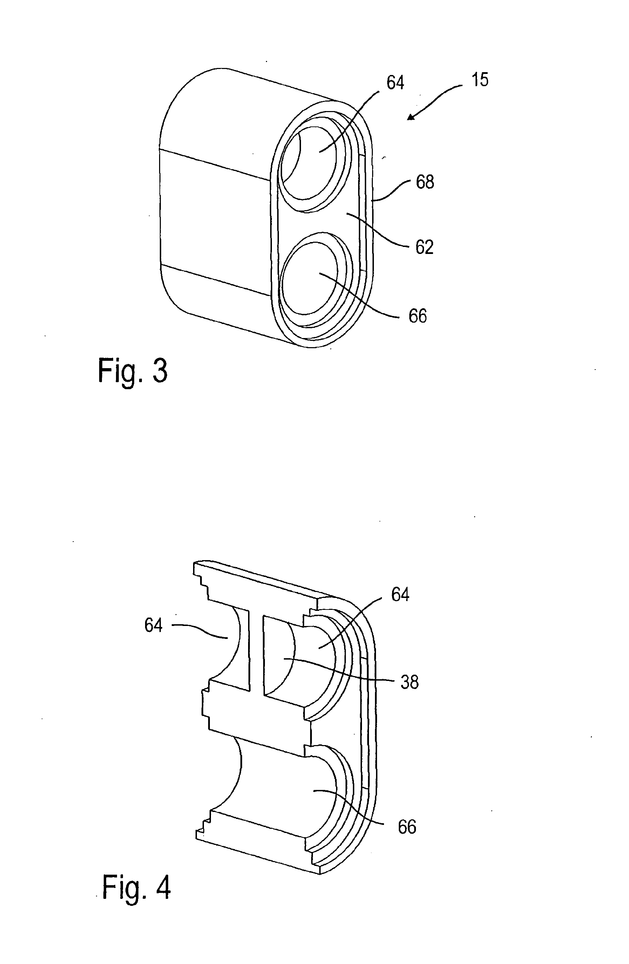

Zur größeren Beabstandung von benachbarten Ventilblöcken können sogenannte Koppelteile 15 zwischengeklemmt werden, die in den Figuren 3 und 4 dargestellt sind. Die Koppelteile 15 besitzen zwei parallele entgegengesetzte Flanschflächen 62, von denen sich jeweils zwei parallele, übereinandergeordnete Durchlaßöffnungen 64, 66 aufeinander zu erstrecken, wobei einer der potentiellen Strömungsdurchlässe durch eine Zwischenwand 38 noch getrennt ist, der andere Strömungsdurchlaß ist von Anfang an offen.

In Figur 4 ist die untere Zwischenwand 38 nicht vorhanden.

Der Abstand zwischen den oberen und unteren Durchlaßöffnungen 64, 66 entspricht dem Abstand der Zuführkanäle 40, 42.

Ein außen umlaufender Kragen 68 ist so groß ausgeführt, daß er geringfügig über den Außenrand der Flanschflächen 44, 46 tritt und damit eine Zentrierung der Koppelteile 15 mit den zugeordneten Ventilgehäusen möglich ist.

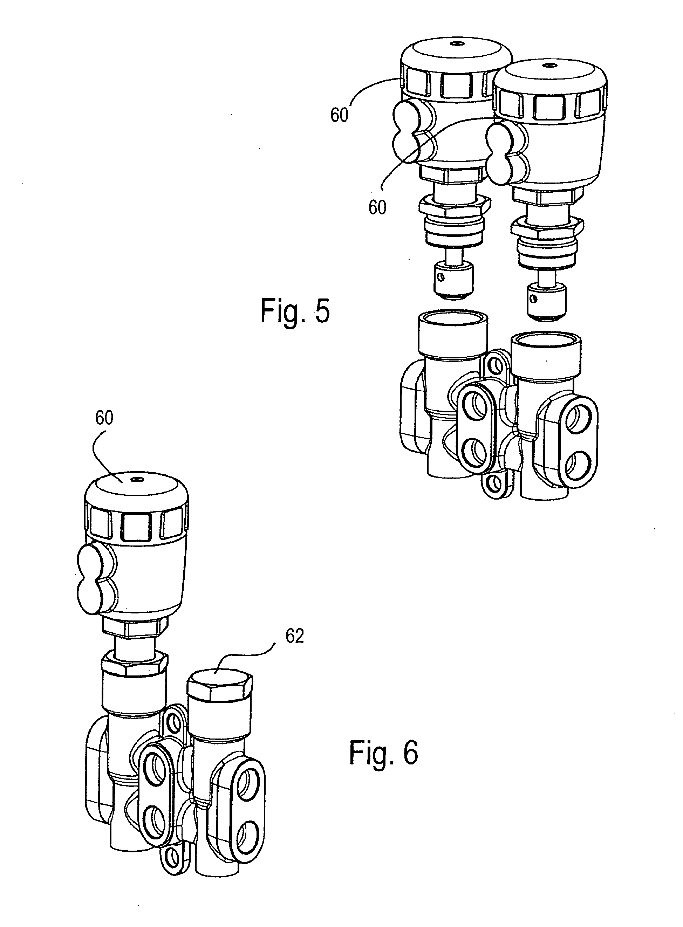

In die Aufnahmeräume 18, 20 können Ventileinsatzteile eingesetzt werden, beispielsweise Prozeßventile, Rückschlagventile, Filter, Drosseln oder andere Komponenten, siehe Figuren 5 und 6.

Die Prozeßventile wirken insbesondere mit den zuvor bereits im Zusammenhang mit Figur 2 beschriebenen Ventilsitzbuchsen 26 zusammen.

Je nachdem, welche fluidischen Verbindungen vorhanden sein sollen, werden entsprechende Zwischenwände 38 entfernt, so daß sich die Leitungsabschnitte 30 bis 36 und Zuführkanäle 40 bis 50 zu durchgehenden Kanälen ergänzen.

Natürlich müssen je nach Einsatzzweck nicht alle Zwischenwände 38 entfernt werden, sondern nur diejenigen, die für die Bildung der entsprechenden Kanäle notwendig sind. Von außen gibt es noch entsprechende Verrohrungen, die in die zugeordneten Zuführkanäle münden.

Die Ventilgruppe ist auch nach unten erweiterbar, beispielsweise könnten entsprechende auf dem Kopf stehende Ventilblöcke von unten angeflanscht werden. Der Grundbaustein, nämlich der Ventilgehäuserohling, bleibt bei sämtlichen Ausführungsformen aber dergleiche. Da die Flanschflächen 40, 46, 52 jeweils gleich sind, lassen sich die Ventilblöcke auch im rechten Winkel zueinander ausgerichtet miteinander koppeln, oder es kann auch an jeder Flanschfläche immer das gleiche Koppelteil 15 angebracht werden.

Bei der Ventilbaugruppe nach Figur 5 ist ein Ventilblock, d.h. ein Ventilrohling, mit zwei Prozeßventilen 60 bestückt, die von oben in die Aufnahmeräume eingesetzt werden.

Bei der Ventilbaugruppe nach Figur 5 ist neben einem Prozeßventil 60 auch noch ein Bauteil 62 in Form eines Rückschlagventils, Filters oder einer Drossel eingesetzt.

## Patentansprüche

1. Ventilgehäuserohling mit einem ersten Aufnahmeraum (18) für einen Ventileinsatz und einen zweiten Aufnahmeraum (20) für einen Ventileinsatz, wobei von jedem Aufnahmeraum (18, 20) wenigstens zwei Leitungsabschnitte (30 bis 36) ausgehen, und mit von der Außenseite des Ventilgehäuserohlings ausgehenden Zuführkanälen (40, 42, 48, 50), die sich in Richtung zu einem zugeordneten Aufnahmeraum (18, 20) oder einem zugeordneten Leitungsabschnitt (30 bis 36) erstrecken, wobei zwischen den Zuführkanälen (40, 42, 48, 50) einerseits und dem zugeordneten Aufnahmeraum (18, 20) oder dem zugeordneten Leitungsabschnitt (30 bis 36) andererseits eine zerstörbare Zwischenwand (38) vorgesehen ist.

2. Ventilgehäuserohling nach Anspruch 1, **dadurch gekennzeichnet, daß** Leitungsabschnitte (30 bis 36) unterschiedlicher Aufnahmeräume (18, 20) aufeinander zu verlaufen und ebenfalls durch eine zerstörbare Zwischenwand (38) voneinander getrennt sind.

3. Ventilgehäuserohling nach Anspruch 1 oder 2, **dadurch gekennzeichnet, daß** Zuführkanäle (40, 42) mit ihren zugeordneten Leitungsabschnitten (30 bis 36) fluchten.

4. Ventilgehäuserohling nach einem der vorhergehenden Ansprüche, **dadurch gekennzeichnet, daß** Zuführkanäle (50) vorgesehen sind, die seitlich auf einen oder mehrere Aufnahmeräume (18, 20) oder Leitungsabschnitte (30 bis 36) hin verlaufen und von diesen durch eine zerstörbare Zwischenwand (38) getrennt sind.

5. Ventilgehäuserohling nach einem der vorhergehenden Ansprüche, **dadurch gekennzeichnet, daß** der erste Aufnahmeraum (18) eine erste Längsachse (22) und der zweite Aufnahmeraum (20) eine dazu parallele zweite Längsachse (24) definiert.

6. Ventilgehäuserohling nach einem der vorhergehenden Ansprüche, **dadurch gekennzeichnet, daß** der erste Aufnahmeraum (18) eine erste Längsachse (22) definiert und rechtwinklig hierzu Zuführkanäle (40, 42, 50) vorgesehen sind.

7. Ventilgehäuserohling nach Anspruch 6, **dadurch gekennzeichnet, daß** Zuführkanäle (40, 42, 50) vorgesehen sind, die rechtwinklig zur ersten Längsachse (22) und rechtwinklig zu anderen Zuführkanälen (40, 42, 50) verlaufen.

8. Ventilgehäuserohling nach einem der vorhergehenden Ansprüche, **dadurch gekennzeichnet, daß** zu allen drei senkrechten Raumachsen parallel verlaufende Zuführkanäle (40, 42, 48, 50) vorgesehen sind.

9. Ventilgehäuserohling nach einem der vorhergehenden Ansprüche, **dadurch gekennzeichnet, daß** die gemeinsame Außenseite von zumindest zwei Zuführkanälen (40, 42, 48, 50) oder Aufnahmeräumen (18, 20) als plane Flanschfläche (44, 46, 52) ausgebildet ist.

10. Ventilgehäuserohling nach einem der vorhergehenden Ansprüche, **dadurch gekennzeichnet, daß** die Aufnahmeräume (18, 20) von einer Oberseite und zumindest je zwei parallele Zuführkanäle (40, 42, 50) von je senkrecht zur Oberseite verlaufenden seitlichen Außenflächen ausgehen.

11. Ventilgehäuserohling nach einem der vorhergehenden Ansprüche, **dadurch gekennzeichnet, daß** die parallelen Zuführkanäle (40, 42, 50) in Richtung einer durch die Aufnahmeräume (18, 20) definierten Längsachse (22, 24) übereinanderliegen.

12. Ventilgehäuserohling nach einem der vorhergehenden Ansprüche, **dadurch gekennzeichnet, daß** der Aufnahmeraum (18, 20) im Bereich der Leitungsabschnitte (30 bis 36) einen Absatz (28) zur Aufnahme einer Ventilsitzbuchse (26) hat.

13. Ventilbausatz mit mehreren Ventilgehäusen aus Ventilgehäuserohlingen gemäß einem der vorhergehenden Ansprüche, wobei mehrere Zwischenwände (38) zumindest teilweise entfernt sind, um durchgehende Kanäle zu bilden und mehrere Zuführkanäle (40, 42, 48, 50) und/oder Leitungsabschnitte (30 bis 36) miteinander in Strömungsverbindung zu bringen.

14. Ventilbausatz nach Anspruch 13, **gekennzeichnet durch** ein Koppelteil (15), das zwischen benachbarten Ventilgehäusen angeordnet ist und diese miteinander strömungsverbindet, wobei das Koppelteil (15) Durchlaßöffnungen (64, 66) besitzt, die in Zuführkanäle (40, 42, 48, 50) der zu koppelnden Ventilgehäuse münden.

15. Ventilgruppe aus einem Ventilbausatz nach Anspruch 13 oder 14, **dadurch gekennzeichnet, daß** Zuführkanäle (40, 42, 48, 50) aneinandergrenzender Ventilgehäuse (17) ineinander übergehen und einen oder mehrere durchgehende Kanäle bilden.

16. Ventilgruppe nach Anspruch 15, **dadurch gekennzeichnet, daß** Zwischenwände (38) zwischen den benachbarten Ventilgehäusen und/oder Koppelteilen (15) entfernt sind zur Bildung von Strömungsdurchlässen zwischen Ventilgehäuse (17) und/oder Koppelteilen (15).

## Claims

1. A valve housing blank having a first receiving space (18) for a valve core and a second receiving space (20) for a valve core, at least two pipe sections (30 to 36) extending from each receiving space (18, 20), and having supply channels (40, 42, 48, 50) which extend from the exterior side of the valve housing blank and run towards an associated receiving space (18, 20) or an associated pipe section (30 to 36), a destructible partition wall (38) being provided between the supply channels (40, 42, 48, 50), on the one hand, and the associated receiving space (18, 20) or the associated pipe section (30 to 36), on the other hand.

2. The valve housing blank according to claim 1, **characterized in that** pipe sections (30 to 36) of different receiving spaces (18, 20) extend towards each other and are also separated from each other by a destructible partition wall (38).

3. The valve housing blank according to claim 1 or 2, **characterized in that** supply channels (40, 42) are arranged in alignment with the pipe sections (30 to 36) associated therewith.

4. The valve housing blank according to any of the preceding claims, **characterized in that** supply channels (50) are provided which extend laterally towards one or more receiving spaces (18, 20) or pipe sections (30 to 36) and which are separated therefrom by a destructible partition wall (38).

5. The valve housing blank according to any of the preceding claims, **characterized in that** the first receiving space (18) defines a first longitudinal axis (22) and **in that** the second receiving space (20) defines a second longitudinal axis (24) which is parallel thereto.

6. The valve housing blank according to any of the preceding claims, **characterized in that** the first receiving space (18) defines a first longitudinal axis (22) and **in that** supply channels (40, 42, 50) are provided which extend at right angles thereto.

7. The valve housing blank according to claim 6, **characterized in that** supply channels (40, 42, 50) are provided which extend at right angles to the first longitudinal axis (22) and at right angles to other supply channels (40, 42, 50).

8. The valve housing blank according to any of the preceding claims, **characterized in that** supply channels (40, 42, 48, 50) are provided which extend parallel to all three perpendicular spatial axes.

9. The valve housing blank according to any of the preceding claims, **characterized in that** the common exterior side of at least two supply channels (40, 42, 48, 50) or receiving spaces (18, 20) is configured as a plane flange face (44, 46, 52).

10. The valve housing blank according to any of the preceding claims, **characterized in that** the receiving spaces (18, 20) extend from an upper side and **in that** at least two respective parallel supply channels (400, 42, 50) extend from lateral exterior faces each extending perpendicularly to the upper side.

11. The valve housing blank according to any of the preceding claims, **characterized in that** the parallel supply channels (40, 42, 50) lie on top of each other in the direction of a longitudinal axis (22, 24) defined by the receiving spaces (18, 20).

12. The valve housing blank according to any of the preceding claims, **characterized in that** in the region of the pipe sections (30 to 36), the receiving space (18, 20) has a step (28) for receiving a valve seat bushing (26).

13. A valve kit having a plurality of valve housings composed of valve housing blanks according to any of the preceding claims, a plurality of partition walls (38) being removed at least partially to form continuous channels and to bring a plurality of supply channels (40, 42, 48, 50) and/or pipe sections (30 to 36) in flow connection with each other.

14. The valve kit according to claim 13, **characterized by** a coupling part (15) which is arranged between adjacent valve housings and fluidically connects them with each other, the coupling part (15) having passage openings (64, 66) which open into supply channels (40, 42, 48, 50) of the valve housings to be coupled.

15. A valve group composed of a valve kit according to claim 13 or 14, **characterized in that** supply channels (40, 42, 48, 50) of adjacent valve housings (17) merge into each other and form one or more continuous channels.

16. The valve group according to claim 15, **characterized in that** partition walls (38) between the adjacent valve housings and/or coupling parts (15) are removed to form flow passages between the valve housings (17) and/or coupling parts (15).

## Revendications

1. Ebauche de boîtier de valve, comportant un premier espace de logement (18) pour un insert de valve et un deuxième espace de logement (20) pour un insert de valve, au moins deux tronçons de conduite (30 à 36) s'étendant à partir de chaque espace de logement (18, 20), et comportant des canaux d'alimentation (40, 42, 48, 50) s'étendant à partir de la face extérieure de l'ébauche de boîtier de valve, lesquels s'étendent en direction d'un espace de logement (18, 20) associé ou d'un tronçon de conduite (30 à 36) associé, une paroi intermédiaire destructible (38) étant prévue entre les canaux d'alimentation (40, 42, 48, 50), d'un côté, et l'espace de logement (18, 20) associé ou le tronçon de conduite (30 à 36) associé, de l'autre côté.

2. Ebauche de boîtier de valve selon la revendication 1, **caractérisée en ce que** des tronçons de conduite (30 à 36) d'espaces de logement (18, 20) différents s'étendent les uns vers les autres et sont également séparés les uns des autres par une paroi intermédiaire destructible (38).

3. Ebauche de boîtier de valve selon la revendication 1 ou 2, **caractérisée en ce que** des canaux d'alimentation (40, 42) sont en alignement avec leurs tronçons de conduite (30 à 36) associés.

4. Ebauche de boîtier de valve selon l'une des revendications précédentes, **caractérisée en ce qu'**il est prévu des canaux d'alimentation (50) qui s'étendent latéralement en direction d'un ou de plusieurs espaces de logement (18, 20) ou tronçons de conduite (30 à 36) et qui sont séparés de ceux-ci par une paroi intermédiaire destructible (38).

5. Ebauche de boîtier de valve selon l'une des revendications précédentes, **caractérisée en ce que** le premier espace de logement (18) définit un premier axe longitudinal (22), et **en ce que** le deuxième espace de logement (20) définit un deuxième axe longitudinal (24) parallèle à celui-ci.

6. Ebauche de boîtier de valve selon l'une des revendications précédentes, **caractérisée en ce que** le premier espace de logement (18) définit un premier axe longitudinal (22) et **en ce qu'**il est prévu à angles droits par rapport à celui-ci des canaux d'alimentation (40, 42, 50).

7. Ebauche de boîtier de valve selon la revendication 6, **caractérisée en ce qu'**il est prévu des canaux d'alimentation (40, 42, 50) qui s'étendent à angles droits par rapport au premier axe longitudinal (22) et à angles droits par rapport à d'autres canaux d'alimentation (40, 42, 50).

8. Ebauche de boîtier de valve selon l'une des revendications précédentes, **caractérisée en ce qu'**il est prévu des canaux d'alimentation (40, 42, 48, 50) qui s'étendent parallèlement à tous les trois axes spatiaux perpendiculaires.

9. Ebauche de boîtier de valve selon l'une des revendications précédentes, **caractérisée en ce que** la face extérieure commune d'au moins deux canaux d'alimentation (40, 42, 48, 50) ou d'espaces de logement (18, 20) est réalisée sous forme de face de bride (44, 46, 52) plane.

10. Ebauche de boîtier de valve selon l'une des revendications précédentes, **caractérisée en ce que** les espaces de logement (18, 20) s'étendent à partir d'une face supérieure et **en ce qu'**au moins deux canaux d'alimentation (40, 42, 50) parallèles respectifs s'étendent à partir de faces extérieures latérales qui s'étendent chacune perpendiculairement à la face supérieure.

11. Ebauche de boîtier de valve selon l'une des revendications précédentes, **caractérisée en ce que** les canaux d'alimentation (40, 42, 50) parallèles sont posés les uns sur les autres en direction d'un axe longitudinal (22, 24) défini par les espaces de logement (18, 20).

12. Ebauche de boîtier de valve selon l'une des revendications précédentes, **caractérisée en ce que** l'espace de logement (18, 20) présente dans la zone des tronçons de conduite (30 à 36) un épaulement (28) pour le logement d'une douille de siège de valve (26).

13. Kit de valve, comprenant plusieurs boitiers de valves composés d'ébauches de boîtier de valve selon l'une des revendications précédentes, plusieurs parois intermédiaires (38) étant au moins partiellement retirées pour former des canaux continus et pour amener plusieurs canaux d'alimentation (40, 42, 48, 50) et/ou tronçons de conduite (30 à 36) en communication fluidique les uns avec les autres.

14. Kit de valve selon la revendication 13, **caractérisé par** une pièce de couplage (15) agencée entre des boîtiers de valve adjacents et les amenant en communication fluidique les uns avec les autres, la pièce de couplage (15) présentant des orifices de passage (64, 66) qui débouchent dans des canaux d'alimentation (40, 42, 48, 50) des boîtiers de valve à coupler.

15. Groupe de valves composé d'un kit de valve selon la revendication 13 ou 14, **caractérisé en ce que** des canaux d'alimentation (40, 42, 48, 50) de boîtiers de valve (17) adjacents se fondent les uns dans les autres et forment un ou plusieurs canaux continus.

16. Groupe de valves selon la revendication 15, **caractérisé en ce que** des parois intermédiaires (38) sont retirées entre les boîtiers de valve adjacents et/ou les pièces de couplage (15) adjacentes pour former des passages d'écoulement entre des boîtiers de valve (17) et/ou des pièces de couplage (15).
